# EUROPEAN PATENT SPECIFICATION

(11) **EP 0 509 189 B1**
(45) Date of publication and mention of the grant of the patent: **05.04.1995**
(21) Application number: 92100059.2
(22) Date of filing: 03.01.1992
(51) Int. Cl.: F02D 43/00, F02D 43/04, F01M 1/16

(54) **Multicylinder engine**
Mehrzylinder-Brennkraftmaschine
Moteur à combustion interne à plusieurs cylindres

(30) Priority: 18.04.1991 JP 112223/91
(43) Date of publication of application: 21.10.1992
(73) Proprietor: MITSUBISHI JUKOGYO KABUSHIKI KAISHA, Tokyo (JP)
(72) Inventor: Irie, Yasutaka, c/o Yokohama Dockyard & Machinery, Naka-ku, Yokohama, Kanagawa Pref. (JP); Arai, Takeshi, c/o Yokohama Dockyard & Machinery, Naka-ku, Yokohama, Kanagawa Pref. (JP); Miyake, Iwao, c/o Nagoya Techn. Inst., Mitsubishi, Nakamura-ku, Nagoya, Aichi Pref. (JP); Mitsui, Shyoji, c/o Yokohama Technical Institute, Naka-ku, Yokohama, Kanagawa Pref. (JP)
(74) Representative: Reinhard - Skuhra - Weise & Partner

(56) References cited:
- EP-A- 0 351 078
- EP-A- 0 368 430
- FR-A- 2 610 993
- US-A- 4 933 862
- PATENT ABSTRACTS OF JAPAN vol. 10, no. 176 (M-491)(2232) 20 June 1986 & JP-A-61 025 945 (HONDA MOTOR CO. LTD.) 5 February 1986
- PATENT ABSTRACTS OF JAPAN vol. 010, no. 222 (M-504) 2 August 1986 & JP-A-61 025 945 (MITSUI ENG & SHIPBUILD CO LTD.) 26 March 1986
- PATENT ABSTRACTS OF JAPAN vol. 014, no. 042 (M-925) 25 January 1990 & JP-A-1 273 837 (HIROYUKI MATSUYAMA) 1 November 1989

## Description

The invention relates to a multicylinder two-cycle diesel engine according to the preamble of claim 1.

A multi-cylinder engine with a controller is known from US-A 4 931 862. This known engine control apparatus uses microcomputers which are provided for every one or every pair of cylinders for controlling the fuel injection and ignition. Said microcomputers disposed for each cylinder control only the fuel system comprising the injector and ignition.

FR-A- 2 610 939 discloses a host system outputting signals to be received by a controller, wherein the controller outputs the control signal to each cylinder and designates the address of a memory associated with each single cylinder of the diesel engine so as to control the amount of injection fuel.

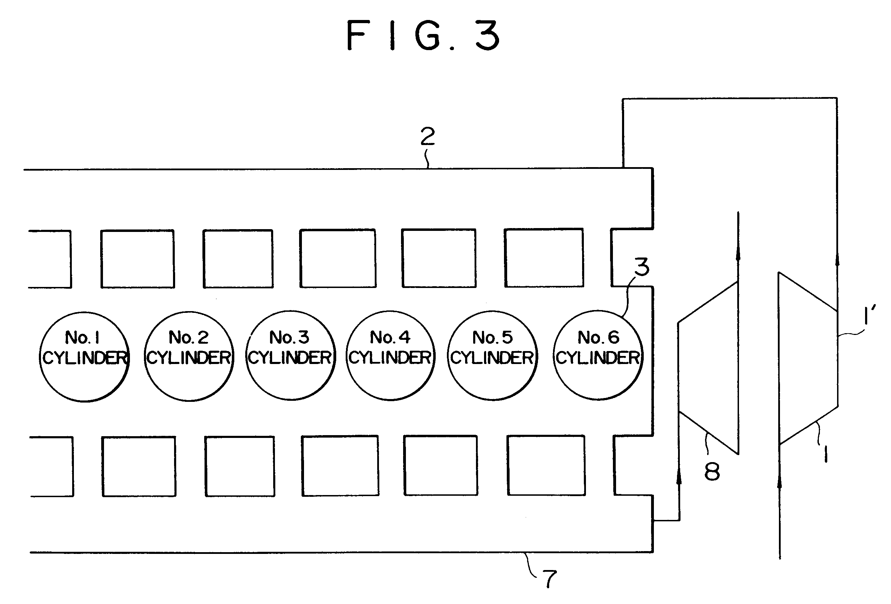

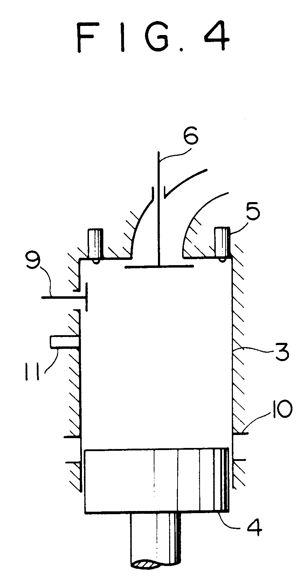

A typical conventional electronically controlled cylinder 2-cycle diesel engine is shown in FIGS. 3 and 4. In these figures, reference numeral 1 denotes a supercharger, 1' denotes a compressor for the supercharger 1, 8 denotes an exhaust gas turbine, 3 denotes a cylinder, 2 denotes a scavenging air box, 7 denotes a static pressure tube, 4 denotes a piston, 5 denotes a fuel injection valve, 6 denotes an exhaust valve, 9 denotes a starting air valve, 10 denotes a scavenging port drilled in the cylinder 3, and 11 denotes an oil valve for cylinder lubricating oil.
The air compressed by the compressor 1' for the supercharger 1 passes through the scavenging air box 2, and is directed into each cylinder 3 through the scavenging port 10. The air in the cylinder 3 is compressed by the piston 4, and fuel is injected into this compressed air from the fuel injection valve 5, so that explosion and combustion occur.

The pressure produced by the combustion lets the piston 4 do the work, while the combustion gas produced by the combustion is discharged as exhaust gas through the exhaust valve 6 after the piston 4 goes down, and enters the static pressure tube 7. The exhaust gas in the static pressure tube 7 gives energy to the exhaust gas turbine 8 for letting it do the work, and then is discharged out of the engine. The oil valve 11 feeds lubricating oil at a proper time to ensure lubrication between the piston 4 and the cylinder 3. At the start of the engine, the starting air valve supplies compressed air to start the engine by pressing down the piston 4.

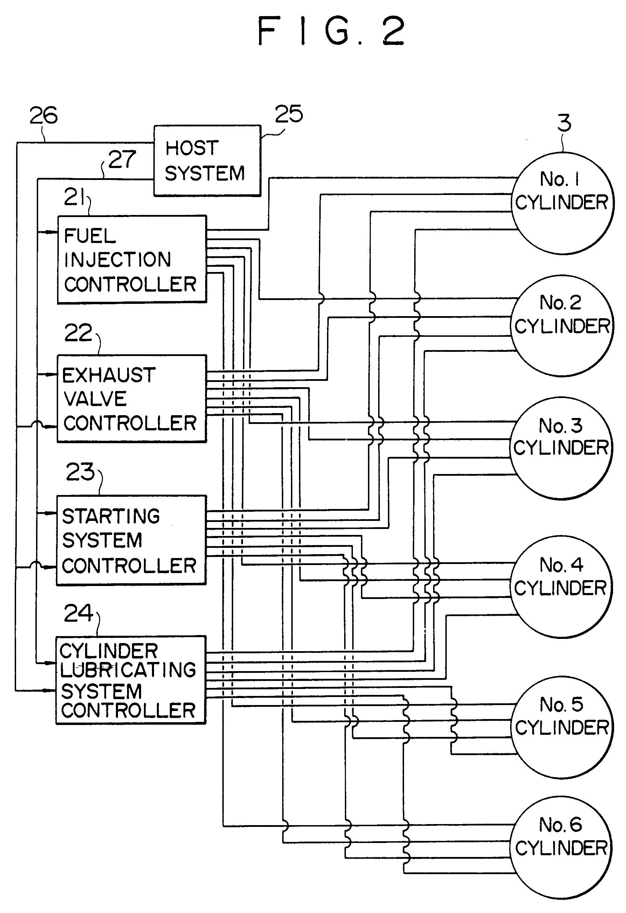

Next, the control system for the fuel injection valve 5, exhaust valve 6, starting air valve 9, and cylinder lubricating means 11 disposed for each cylinder 3 will be described below with reference to FIG. 2.

The conventional multicylinder engine has controllers for each system to be controlled, namely for each control function indicated in FIG. 2. A fuel injection system controller 21 is connected to the fuel injection valves 5 of all the cylinders, and an exhaust valve system controller 22 is connected to the exhaust valves 6 on all the cylinders. Also, a starting system controller 23 and a cylinder lubricating system controller 24 are connected to the starting air valves 9 and the oil valves 11 of all the cylinders, respectively.

A host system 25 issues operational instructions 26 for the amount of fuel injected, the timing of fuel injection, the timing of operating the exhaust valves, the timing of the starting air valve, the amount of lubricating oil for the cylinders, the timing of operating the oil valves, and so on, and it also provides operational information 27 about the crank angle, the number of revolutions of the engine, and so on. Then, the controllers 21 through 24 perform specified calculations, and let the systems under control operate in accordance with respective instruction signals; the fuel injection system controller controls the fuel injection valve S of each cylinder, the exhaust valve system controller 22 controls the exhaust valve 6 of each cylinder, the starting system controller 23 controls the starting air valve 9 of each cylinder, and the cylinder lubricating system controller 24 controls the lubricating oil valve 11 of each cylinder.

The conventional multicylinder engine has the following disadvantages because it has controllers 21-24 for controlling each system of fuel injection, exhaust valve, starting, and cylinder lubricating as shown in FIG. 2.
(1) The element of each control system has significant influence on the operation of the engine. In the event of controller failure only in any one system, the engine will stop or a serious accident will occur that would make it necessary to halt the engine.
(2) When the control system is applied to an engine with a different number of cylinders, the software must be prepared to adjust the control timing in accordance with the number of cylinders, and the hardware must be modified because the number of input/output points differs, requiring much labor and effort in developing the controllers for the new engine.
(3) As the number of cylinders is increased, the control timing becomes complex, and high calculation speed becomes necessary, which requires a computer with a higher capacity.

### Summary of the Invention.

An object of this invention is to provide a multicylinder engine in which a failure of one controller does not interfere with the operation of the engine, and a high control accuracy is maintained, and the cost of the control system does not increase even when the number of cylinders is increased.

The above mentioned object is solved by the features of the characterizing portion of claim 1.

Preferred embodiments of a multicylinder two-cycle diesel engine are characterized by claims 2 and 3.

The present invention also provides a multicylinder engine having fuel injection valves, exhaust valves, starting air valves, and cylinder lubricating means which are operated under electronic control, which engine is characterized in that respective electronic controllers are installed for controlling the fuel injection valve system, for controlling the exhaust valve system, for controlling the starting air valve system, and for controlling the cylinder lubricating system for each cylinder, and also the controllers for the four systems are combined and installed for each cylinder.

Since the electronic controllers are installed for each cylinder, if a controller for one cylinder fails, the operation of that cylinder is stopped and the other cylinders can operate without being affected by the faulty cylinder because they have independent respective controllers.

When the number of cylinders is increased, all that is needed is to increase the number of controllers in response to the increased number of cylinders, and there is no need for significantly increasing or modifying the software.

The present invention provides the following effects:
(1) Since the electronic controllers are installed independently for respective cylinders, even if a controller for any cylinder fails, the engine can be kept operating by separating the failed cylinder and by using only the cylinders in normal operation.
(2) The system can be easily applied to an engine having any number of cylinders merely by reassigning new crank angles and by changing the number of the electronic controllers.
(3) Since each electronic controller independently controls only the corresponding cylinder, there is no need for increasing the software and hardware even when the number of cylinders is increased.

### Brief Description of the Drawings

Fig. 1 shows a block diagram of an embodiment of this invention;
Fig. 2 shows a block diagram of a conventional control system of multicylinder engine;
Fig. 3 shows a schematic view of a typical multicylinder engine; and
Fig. 4 shows a schematic sectional view of the main part of the engine.

### Detailed Description of the Preferred Embodiment

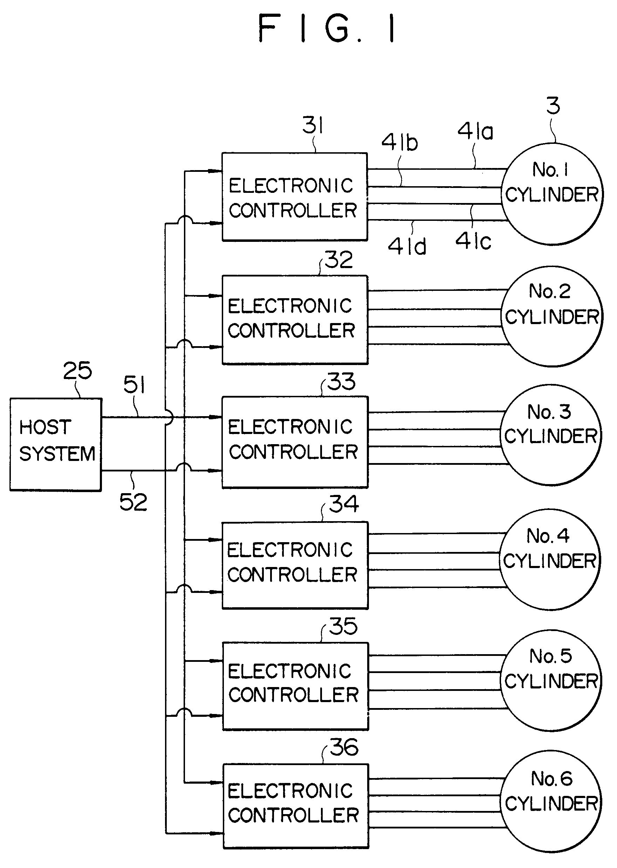

An embodiment of this invention will be described below with reference to FIGS. 1, 3 and 4. Reference numeral 1' denotes a compressor for supercharger 1, 8 denotes an exhaust gas turbine, 3 denotes a cylinder of the engine, 4 denotes a piston, 5 denotes a fuel injection valve, 6 denotes an exhaust valve, 9 denotes a starting air valve, 10 denotes a scavenging port, 11 denotes a lubricating oil valve, 2 denotes a scavenging air box, and 7 denotes a static pressure tube. The construction and operation of these components are the same as those of a conventional engine.

FIG. 1 is a block diagram of a control system of a 6-cylinder 2-cycle diesel engine according to this invention. Reference numerals 31-36 denote electronic controllers installed for each of No.1 through No.6 cylinders.

The electronic controllers 31-36 send control signals 41a, 41b, 41c, and 41d to the fuel injection valve 5, the exhaust valve 6, the starting air valve 9, and the oil valve 11. Reference numeral 41a indicates the control signal for the fuel injection system, 41b indicates the control signal for the exhaust valve system, 41c indicates the control signal for the starting system, and 41d indicates the control signal for the cylinder lubricating system.

The hardware mechanism to operate the valves upon instructions (control signals) from the electronic controllers 31-36 is the same as that of the conventional engine. For example, mechanisms for the fuel injection system and exhaust valve system have been disclosed in the Japanese Patent Provisional Publication No. 176412/1984 (59-176412), a mechanism for the starting system has been disclosed in the Japanese Utility Model Provisional Publication No. 147761/1985 (60-147761), and a mechanism for the cylinder lubricating system has been disclosed in the Japanese Utility Model Provisional Publication No. 51003/1983 (58-51003).

The hardware mechanism is not limited to those described above, and it may be any mechanism in which each valve can be controlled electronically.

Next, the operation of this embodiment will be described.

A host system 25 issues operational instructions 51 for fuel injection amount, fuel injection timing, exhaust valve operation timing, starting air valve operation timing, cylinder lubricating oil amount, lubricating valve operation timing, and so on, and the operational information 52 about the crank angle, the number of revolutions of the engine, and so on, which are input into the electronic controllers 31-36. Then, the controllers 31-36 perform specified calculations, and let the fuel injection valve 5, exhaust valve 6, starting air valve 9, and oil valve 11 operate in accordance with respective instruction signals.

For example, if the electronic controller 31 fails, the cylinder 3 connected to this controller stops. Nevertheless, the engine continues to operate because the other cylinders individually receive control signals from the electronic controller 32-36.

The operational instructions 51 and the operational information 52 issued from the host system 25 and the calculation process within the electronic controllers 31-36 are not particularly specified; any publicly known means may be used in carrying out this invention. In this invention, for example, the control method for matching the fuel injection valve 5 to the current state of operation is not restricted to a particular system.

## Claims

1. A multicylinder two-cycle diesel engine with an electronic control system for controlling means including at least a fuel injection valve (5) for injecting fuel into a cylinder (3) and an exhaust valve (6),
**characterized in,** that
different electronic controllers (31, 32, 33, 34, 35, 36) are installed for corresponding different cylinders (No. 1, No. 2, No. 3, No. 4, No. 5, No. 6), respectively, wherein each single different electronic controller outputs at least two control signals (41a, 41b) for controlling at least the fuel injection valve system (5) and the exhaust valve system (6) associated with each single different cylinder (3).

2. The multicylinder two-cycle diesel engine according to claim 1, wherein said means further comprise a starting air valve system.

3. The multicylinder two-cycle diesel engine according to claim 1 or 2, wherein said means further comprise a cylinder lubricating system for effecting timely injection of lubricating oil into a cylinder.

## Patentansprüche

1. Mehrzylinder-Zweitakt-Dieselmotor mit einem elektronischen Steuersystem zur Steuerung von Einrichtungen mit wenigstens einem Einspritzventil (5) zum Einspritzen von Kraftstoff in einen Zylinder (3) und einem Auslaßventil (6),
dadurch gekennzeichnet, daß
verschiedene elektronische Steuereinrichtungen (31, 32, 33, 34, 35, 36) für die entsprechenden verschiedenen Zylinder (Nr. 1, Nr. 2, Nr. 3, Nr. 4, Nr. 5, Nr. 6) jeweils installiert sind, wobei jede verschiedene einzelne elektronische Steuereinrichtung mindestens zwei Steuersignale (41a, 41b) zur Steuerung von mindestens dem Kraftstoffeinspritzventilsystem (5) und dem Auslaßventilsystem (6) abgibt, welche zu jedem einzelnen verschiedenen Zylinder (3) gehören.

2. Mehrzylinder-Zweitakt-Dieselmotor nach Anspruch 1, bei dem die Einrichtungen ferner ein Anlaßluftventilsystem aufweisen.

3. Mehrzylinder-Zweitakt-Dieselmotor nach Anspruch 1 oder 2, bei dem die Einrichtungen ferner ein Zylinderschmiersystem zum rechtzeitigen Ausführen des Einspritzens des Schmieröls in einen Zylinder aufweisen.

## Revendications

1. Un moteur diesel multicylindres à deux temps avec un système de commande électronique pour commander des moyens comprenant au moins une valve (5) d'injection de carburant pour injecter du carburant dans un cylindre (3), et une soupape d'échappement (6), caractérisé en ce que différents dispositifs de commande électronique (31, 32, 33, 34, 35, 36) sont installés pour différents cylindres respectivement correspondant (Nos, 1, 2, 3, 4, 5, 6), chaque dispositif de commande différent individuel délivrant au moins deux signaux de commande (41a, 41b) pour commander au moins le système de valve d'injection de carburant (5) et le système de soupape d'échappement (6) associés à chaque cylindre individuel différent.

2. Le moteur diesel multicylindres à deux temps selon la revendication 1, dans lequel lesdits moyens comprennent, en outre, un système de soupape d'air de démarrage.

3. Le moteur diesel multicylindres à deux temps selon les revendications 1 ou 2, dans lequel lesdits moyens comprennent, en outre, un système de lubrification de cylindre pour effectuer, en temps utile, l'injection d'huile de lubrification dans un cylindre.
